(19) Europäisches Patentamt
European Patent Office
Office européen des brevets

(11) EP 0 598 872 B1

(12) **EUROPEAN PATENT SPECIFICATION**

(45) Date of publication and mention of the grant of the patent:
**25.11.1998 Bulletin 1998/48**

(21) Application number: **93911307.2**

(22) Date of filing: **12.05.1993**

(51) Int Cl.6: **C08K 5/00**, C08L 27/06, C08K 11/00, A61J 1/05 // (C08K5/00, 5:15, 5:56), (C08K5/00, 5:15, 5:57)

(86) International application number:
**PCT/US93/04567**

(87) International publication number:
**WO 93/24563 (09.12.1993 Gazette 1993/29)**

(54) **ADDITIVES FOR POLYMER COMPOSITIONS**
ADDITIVE FÜR POLYMERZUSAMMENSETZUNGEN
ADDITIFS POUR COMPOSITIONS POLYMERES

(84) Designated Contracting States:
**DE FR GB IT NL**

(30) Priority: **27.05.1992 US 889550**

(43) Date of publication of application:
**01.06.1994 Bulletin 1994/22**

(73) Proprietor: **BAXTER INTERNATIONAL INC.**
**Deerfield, IL 60015 (US)**

(72) Inventors:
- **BUAN, Lillian**
  **Crystal Lake, IL 60012 (US)**
- **LAURIN, Dean**
  **Round Lake Beach, IL 60073 (US)**

(74) Representative: **MacGregor, Gordon et al**
**Eric Potter Clarkson,**
**Park View House,**
**58 The Ropewalk**
**Nottingham NG1 5DD (GB)**

(56) References cited:
**GB-A- 2 192 004**

- **DATABASE WPI Derwent Publications Ltd., London, GB; AN 83-714226**
- **DATABASE WPI Derwent Publications Ltd., London, GB; AN 92-086187**

EP 0 598 872 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

The present invention relates to vinyl chloride polymer formulations for medical use. More specifically, the present invention relates to the stabilization of a flexible, plastic vinyl chloride polymer formulation for sterilizable medical devices made from the formulations.

Various polymer formulae can be utilized to create extruded and molded products such as flexible containers, tubing devices and injection molded articles. As examples, flexible containers and tubing devices are utilized in the medical industry for containing and delivering inter alia, parenteral solutions such as intravenous solutions, dialysis solutions, drugs and medications, nutrition products, respiratory therapy products, blood, plasma and other blood related products. When utilized in the medical industry, these products will often contain or contact fluids or solids that are introduced into a patient's body. It is, therefore, necessary for these devices to be essentially transparent; flexible; essentially free of extractables; nonabsorbent of the fluids or solids to be contained; essentially free of particulate matter; and capable of maintaining a product contained therein under sterile conditions until the product is accessed or removed. The plastic material from which these containers, tubing and other articles are constructed must also meet these requirements.

It is also important that the plastic material used in constructing these containers, tubing and other articles is sufficiently strong so that the products constructed from the plastic material have sufficient strength. Furthermore, it is desirable, for economic reasons, that any such plastic material be readily constructed into a container, tubing or other article on commercially available, or easily modified, production machinery. Factors such as production rates, material stabilization, particulate generation, scrap rates and potential regrind are critical considerations in determining the processability of any plastic material used in constructing these types of products.

As set forth above, because the plastic material will be processed into flexible containers and other medical devices that either house or come into contact with a medical product that is introduced into a patient's body, it is necessary that the plastic does not contain chemicals that can be extracted by the medical product or are likely to pass with the medical product into the patient's body. This is especially critical with respect to the various additives to the polymer formulation which are utilized to make the plastic material flexible, generally processable and stable. The toxicity of such additives has been a matter of concern and an area of monitoring.

It has been customary for medical devices such as intravenous solution bags, dialysis containers, blood bags, administration sets and tubing, to be sterilized thermally or by the action of a chemical sterilizing agent such as ethylene oxide gas. In the case of thermal sterilization, however, there has been the problem that the synthetic resin used in such medical containers, tubing and other articles is required to resist thermal degradation. In the case of sterilization with ethylene oxide gas, there has been the problem that, after sterilization, a good deal of time is wasted before the sterilized medical containers, tubing and other articles are free from ethylene oxide gas. As an alternative, sterilization by radiation has been proposed. Since this method is carried out at low temperatures, there is no longer a requirement that the materials of medical containers, tubing and other articles should be capable of withstanding heat and resisting thermal degradation.

Nevertheless, radiation may cause such adverse effects as deterioration and discoloration of the irradiated medical containers, tubing and other articles unless the plastic materials are properly formulated.

Vinyl chloride polymers ("PVC") have many excellent qualities which make it one of the world's leading commercial plastics. In the medical industry, PVC is widely used in numerous applications including intravenous and drug delivery containers, dialysis containers, blood bags, solution administration sets, tubing and other molded articles. Various plasticizers, stabilizers and other additives have been relied upon in the processing and utilization of PVC for these medical uses but at the acceptance of some other potentially adverse properties. For example, flexible IV containers are generally required to have low extractables, low absorption, low water-blush haze, low color and transparency. During manufacturing, plasticizers, stabilizers and other additives are utilized during manufacturing for improved processing of PVC, in terms of shorter production times, decreased wear and tear of equipment, absence of particulate matter, low scrap rates and high regrind rates. And ultimately, the PVC container must be stable both during manufacture, processing and use.

PVC's acknowledged weakness is thermal instability during processing and use, resulting in dehydrochlorination and conjugated unsaturation, and leading to increasing discoloration as the length of the conjugation increases. Thermal degradation has been retarded by the addition of a combination of certain selected stabilizers, typically including calcium soap, zinc soap, organo-tin compounds including dialkyl tin esters such as alkyl carboxylic esters (such as laurate and stearate), di(n-octyl)tin maleate polymer and di(n-octyl)tin-S,S'-bis(isooctyl)mercaptoacetate, epoxidized fatty esters and organic phosphite esters.

To meet low amounts of extractable materials required of such medical containers, tubing and other articles, stabilization and processing difficulties maybe encountered by degradation of PVC due to low stabilizer content. This low

stabilizer content however, has the opposite positive effect by reducing the aqueous extractables from the PVC film. When higher extractables are tolerable or stability of the PVC is more critical, higher amounts of processing aids and stabilizers may be used, but then processing difficulties can be encountered from the plate-out of the excess lubricant or build-up of cross-linked ("cured") epoxides and of other processing aids on the die and chill roll equipment during known extrusion and molding techniques.

GB-A-2192004 discloses a stabiliser system which requires the use of a Zn salt of an aliphatic $C_8$-$C_{24}$-monocarboxylic acid or of a $C_8$-$C_{24}$-hydroxymonocarboxylic acid or of benzoic acid or tert.-butylbenzoic acid. The system also preferably comprises a Ca, Ba and/or Mg salt of an aliphatic $C_8$-$C_{24}$-monocarboxylic acid or of a $C_8$-$C_{24}$-hydroxymonocarboxylic acid or of benzoic acid or tert.-butylbenzoic acid. In addition, thiodiethylene glycol bisacetoacetate is a further essential component.

JP-A-58098351 discloses the use of organic Sn maleate ester and organic Sn laurate in a combined amount of 3 parts per 100 parts of PVC, together with cadmium stearate.

JP-A-4031460 discloses the use of a mercapto system Sn stabiliser along with maleate system Sn stabilisers in a combined amount of 2.5 parts per 100 parts of PVC.

## Summary of the Invention

The additive system of the present invention is as set out in Claim 1.

The additive system of the invention improves the processing and functional characteristics of medical devices made from PVC. These additive systems surprisingly exceed previously known systems with respect to the melt fabrication and heat stability of the PVC (e.g. increased thermal stability for faster melt flow during extrusion without discoloration or formation of black particles; decreased plate-out or build-up on the processing equipment; decreased scrap and equipment downtime; increased use of regrind) and the desired product characteristics (e.g., low color, optical haze, water-blush, extractables and particle generation).

The additive system of the present invention consists essentially of primary and secondary stabilizers and an external lubricant. The preferred components are a zinc salt primary stabilizer with an epoxide secondary stabilizer and a polyethylene external lubricant. Other processing aids and performance additives such as bases (i.e., magnesium oxide, dihydrotalcite, calcium carbonate), antioxidants (i.e.,hindered phenols and amines, organophosphites or phosphonites), colorants, antimicrobials and internal lubricants may be optionally included.

These additive systems may be utilized for rigid, semi-rigid or flexible PVC applications. For example; the additive systems of the present invention provide stability and processability to low or non-plasticized PVC formulations injection molded to produce rigid or semi-rigid products such as filter housings and drip chambers. Likewise, the additive systems of the present invention also provide stability and processability to plasticized PVC formulations typically used to produce flexible IV containers for fluids such as intravenous solutions, peritoneal dialysis solutions, blood and blood products. Commonly known plasticizers include dialkyl phthalates, trialkyl trimellitates alky or aryl benzoates, citrate esters, and polymeric plasticizers such as polyurethanes, terpolymers of ethylene-vinyl acetate-carbon monoxide, and polyesters.

Additional features and advantages of the present invention are described in, and will be apparent from, the detailed description of the presently preferred embodiment.

## DETAILED DESCRIPTION OF THE PRESENTLY PREFERRED EMBODIMENT

The present invention provides additive systems for PVC formulations to further improve the processing of materials and the functional characteristics of medical containers, tubing devices and molded articles made from such materials. The preferred composition of the additive systems of the present invention comprises the optimal amounts of primary and secondary stabilizers with external lubricants where the primary stabilizer is a Lewis-acid metal compound which resists extraction from the PVC plastic by aqueous fluids.

The primary stabilizer is selected from the Lewis acid metal compounds, such as organo-tin compounds including dialkyl tin esters such as alkyl carboxylic esters (such as laurate and stearate), di(n-octyl)tin maleate polymer and di (n-octyl)tin-S,S'-bis(isooctyl)mercaptoacetate; organo-zinc compounds including alkyl carboxylates such as zinc salts of fatty acids (laurate, palmitate, stearate, erucate, behenate, abietates, and the like) and of polymeric ionomers based on combinations of monomers such as ethylene, alkyl acrylates, or styrene with acrylic acid, fumaric or maleic acids and the like. This group of primary stabilizers does not include metal ions from Groups IA or IIA (of the periodic table) whose use is known to result in water-blush haze of the plastic formulation when exposed to water (either liquid or vapor). For example, zinc acts as Lewis-acid catalyst for removing labile chlorines from the PVC, but also initiates polymerization and cross-linking of the oxirane groups of the epoxide secondary stabilizer (discussed below), in the molten polymer bulk and on surfaces of the melt processing equipments. The primary stabilizer in the PVC formulation is in the range of 0.02 - 0.5 parts per hundred parts of PVC resin ("phr"). Preferably, the primary stabilizer is zinc

stearate, preferably present in the amount of approximately 0.05 - 0.3 phr. An advantage of zinc stearate is that it provides high optical clarity before and after sterilization by steam, ethylene oxide, or irradiation.

The secondary stabilizer is selected from the group consisting of epoxides which are sufficiently compatible with PVC and the other formulation ingredients so as to provide stability of the PVC formulation. Many of these epoxides are also good plasticizers of PVC and some are suitable for being the sole and primary plasticizer in the formulation. Such epoxides may be used singly or in any combination. Suitable epoxides include but are not limited to glyceryl tris (epoxy oleate), low oxirane content epoxidized linseed or soya oils or partially-hydrogenated unsaturated vegetable oils, propylene glycol bis(epoxy oleate), and copolymers of glycidoxy acrylate. The secondary stabilizer will contain less than 5.2 oxiranes per molecule. The secondary stabilizer is used in the PVC formulation in the range of 10 to 100 phr as required by the application of the formulation. For example, if the additive system is being added to a plasticized PVC for a flexible application (i.e., a flexible medical container), then the preferred range for the secondary stabilizer is approximately 10 - 20 phr. Similarly, if the additive system is being added to a non-plasticized PVC for a flexible application, then the preferred range may be approximately 40 - 80 phr. In the present invention, the preferred secondary stabilizer is propylene glycol bis(epoxy oleate) which typically contains 2.5 oxiranes per molecule. Furthermore, the purity of the epoxides have been found to be a critical factor in obtaining PVC formulations which have low extractability in aqueous solutions, biological fluids and tissues.

Melt processing is necessary for practical fabrication of PVC formulations such as those of the present invention. External lubricants provide slip against and isolation from the metals of the processing equipment; for example, film extruder screws, dies, and film cooling rolls; or injection molding screws, sprews and runners. Practical benefits of this lubrication for film extrusion are (i) faster melt flow rates, (ii) less thermal and shear-stress degradation resulting in discoloration, black specks, lower molecular weight and more water extractable byproducts, (iii) prevention of die drag lines, and (iv) prevention of loose particles on the film from buildup of degraded and cross-linked materials on the die lips, with less sticking of the film to the cooling rolls and of the finished film to itself. However, the concentration of lubricant must be sensitively balanced to achieve such benefits without excess lubricant causing poor conveyance (e.g., throughput) of the melt , build-up of lubricant "plate-out" on the die and extrusion equipment (drag lines, loose particles, and degraded material on the film), and build-up of "plate-out" on the cooling rolls (loose particles on the film).

External lubricants common in PVC formulations become concentrated, during processing, on the surfaces of the flowing melt, since they are incompatible with the other ingredients of the molten polymer formulation. The epoxide stabilizers and metal-complex stabilizers (and by-products) most common in PVC formulations are also rheologically concentrated at the surfaces of the flowing melt due to their lower viscosity relative to PVC. Therefore, the flowing melt surface has a concentrated mixture of epoxide; metal-complex by-products, lubricant, and protonic acids (HCl and carboxylic from PVC dehydrochlorination and subsequent neutralization by carboxylate soaps of the stabilizer system). Consequently, the epoxide polymerizes, cross-links and adheres to the metal surfaces of the processing equipment and binds with the external lubricant, pulling the lubricant from the flowing melt surface.

The tenacity and extent of build-up of this deposit depends not only on the viscosities, concentrations, amounts, and oxirane-reactivity of these components, but also on the polymerization molecular weight and cross-link density, which in turn are determined by the ratio of epoxide to initiator (acid or base) concentrations and the number of oxirane groups and their proximity on the epoxide (i.e., the oxirane equivalent weight of the epoxide). Therefore, there is an optimum ratio of epoxide to initiator which gives minimum plate-out while providing adequate material stability and low extractability when used with water-based fluids.

External lubricants useful in the present invention include, for example, polyethylenes, oxidized polyethylenes, polyethylene ionomers, polyfluorocarbons (e.g., polymers containing TFE, FEP, $VF_2$, perfluoroether), paraffin waxes, ester waxes, amide waxes, poly(ethylene ether), copolymers of ethylene oxide and propylene oxide, polyamides, polypeptides, poly(vinyl alcohol), poly(ethylene-co-vinyl alcohol), poly(hydroxyalkyl acrylates and methacrylates), copolymers of acrylic acid or its salts, copolymers of maleic anhydride with ethylene propylene or styrene, and polymers containing sulfonic acid groups and their salts, and, sulfonated poly(aryl sulfones). Preferably, the lubricant of the present invention is stable during processing and use, and does not contaminate the medical or biological substances which contact the PVC formulation. Each of these lubricants may be used singly or in combination, provided optimization of their concentrations and the ratio of epoxy to initiators (acids or bases, added or generated as by-products), is determined as discussed above.

The performance of the PVC formulations of the present invention, as we have learned, is dependent upon the proper balance between the amounts and properties of the primary and secondary stabilizers and the external lubricants. The appropriate balance of stabilizers and lubricants are especially necessary in order to obtain low color, low extractables and little or no plate-out on melt processing equipment surfaces. Plate-out may be caused by acid or base catalyzed polymerization and cross-linking of the epoxide compounds at the surface of the molten PVC formulation during melt-processing (i.e., compounding or fabrication) which creates a strong epoxide adhesion of external lubricant to metal surfaces contacting the melt. The strength of this adhesion depends on the molecular weight and cross-link density of the polymerized epoxide, which in turn is maximized at some intermediate stoichiometric ratio of the epoxide

to the acid or base initiator, for example, the strong Lewis-acid byproducts of the primary stabilizer (e.g., the chlorides of tin or zinc) or the excess basicity from anti-acid buffers (e.g., magnesium oxide particles).

Prevention or minimization of such plate-out consequently decreases the incidences of loose particles found in the contained fluids which contact the plastic surfaces, because frequently the plate-out breaks away from the processing equipment and returns loosely attached to the plastic surface. Furthermore, avoiding plate-out also prevents contamination of the PVC articles by particles (usually black specks) released from highly degraded plate-out on the hot metal surfaces of the melt processing equipment. Using this theory, we have been able to prevent plate-out even on the troublesome surfaces which are reactive to epoxide and which have high surface energy (typically above 40 dynes per cm), such as the metal oxide surfaces of stainless steels commonly used to melt fabricate plasticized PVC formulations. Observed extrusions and injection moldings of and analyses of plate-out material compositions the PVC formulation of the present invention support this explanation.

A preferred embodiment of the present invention uses a high-density linear polyethylene of moderately high melt viscosity at approximately 0.015 weight percent in a PVC formulation and stabilized by approximately 9.1 weight percent propylene glycol bis(epoxy oleate) and approximately 0.063 weight percent zinc stearate (stearic acid buffered). When plasticized with approximately 28 weight percent diethylhexyl phthalate, the PVC formulation having the preferred additive system is extrudable as film at high rates without plate-out, discoloration, black particles, or loose particles. Further, the PVC formulation having the preferred additive system is injection moldable without discoloration, black particles, or sticking in the mold. Articles fabricated of PVC having this preferred addivite system are sterilizable by radiation, steam, or ethylene oxide without excessive discoloration, generation of extractables or toxicity. Furthermore, PVC having this preferred additive system provides flexible containers for pharmaceutical or biological liquids which remain extraordinarily transparent after steam sterilization (e.g., little blush or permanent haze).

Several processing and functional test comparisons between film samples of the preferred embodiment of the present invention and of other commercially available PVC formulations are reported in Tables 1 and 2 and Figures 1-5. Each film sample tested is plasticized with equal amounts of diethylhexylphthalate. Table 1 indicates the components of the additive system of the preferred embodiment compared to additive systems of the other PVC formulations.

**TABLE 1**

ADDITIVE SYSTEMS FOR PLASTICIZED PVC MATERIALS[1]

| | Control 1[2] | Control 2[2] | Control 3[3] | Control 4[2] | Example[3] |
|---|---|---|---|---|---|
| **STABILIZERS** | | | | | |
| - Primary | | | | | |
| Zinc Stabilizer | | | | | |
| Zinc - calcium stearate | x | | x | | |
| Zinc stearate | | x | | x | x |
| - Secondary | | | | | |
| Epoxide | | | | | |
| Approx. 5.2 oxiranes/molecule | x | x | | | |
| Approx. 2.5 oxiranes/molecule | | | x | x | x |
| LUBRICANTS | | | | | |
| Ethylene bis(stearamide) | x | | x | | |
| High density polyethylene | | x | | x | x |
| Plate-Out/Building-up[4] | No | Yes | No | Yes | No |
| Particulate Matter[5] | Yes | No | Yes | Yes | No |

[1] Each sample material contains diethylexylphathalate
[2] Contains approximately 0.2 phr or more of Primary Stabilizer
[3] Contains less than 0.2 phr of Primary Stabilizer
[4] Appears during processing on extrusion dies and chill rolls
[5] Appears during processing typically as black specks

**TABLE 2**

| TEST ITEM | | UV@ 220nm | UV@ 241nm | Zinc (ppm) | Oxidizables (ml) | ΔpH | Ammonium (ppm) |
|---|---|---|---|---|---|---|---|
| Tolerance | | 0.08a.u. | 0.05a.u. | NMT 0.5 | NMT 1.0ml | NMT1.0 | NMT 0.5 |
| **EXAMPLE** | | | | | | | |
| Lot 1 | Roll A | 0.051 | 0.031 | 0.27 | 0.48 | -0.74 | <0.5 |
| | Roll B | 0.057 | 0.031 | 0.26 | 0.38 | -0.82 | <0.5 |
| Lot 2 | Roll A | 0.045 | 0.027 | 0.24 | 0.40 | -0.73 | <0.5 |
| | Roll B | 0.055 | 0.029 | 0.24 | 0.40 | -0.80 | <0.5 |
| Lot 3 | Roll A | 0.048 | 0.027 | 0.26 | 0.45 | -0.82 | <0.5 |
| | Roll B | 0.043 | 0.026 | 0.26 | 0.40 | -0.82 | <0.5 |
| **EXAMPLE W/ 30% REGRIND** | | | | | | | |
| Lot 1 | Roll A | 0.048 | 0.029 | 0.27 | 0.52 | -0.84 | <0.5 |
| | Roll B | 0.051 | 0.029 | 0.26 | 0.38 | -0.84 | <0.5 |
| **CONTROL 3** | | | | | | | |
| Lot 1 | Roll A | 0.046 | 0.030 | 0.12 | 0.32 | -0.65 | <0.5 |
| | Roll B | 0.053 | 0.034 | 0.11 | 0.36 | -0.57 | <0.5 |
| **CONTROL 4** | | | | | | | |
| Lot 1 | Roll A | 0.031 | 0.027 | 0.59 | 0.5 | -0.40 | <0.5 |
| | Roll B | 0.027 | 0.027 | 0.61 | 0.35 | -0.2 | <0.5 |

The characteristic progression of colors that PVC exhibits on being heated (clear, colorless to yellow to yellow-orange to red to brown) is typical of systems which develop increasingly long conjugated polyene sequences. PVC is quite sensitive to even mild heating and the formation of visible color usually is the first evident indication of degradation.

These changes occur long before any of the more serious manifestations of degradation become evident. If heating is continued, physical changes will occur.

Static thermal (oven) and dynamic thermal (Brabender) color stability testing provide an indication of early color generation to dehydrochlorination. These stability tests are approximations of the degradation observed during extrusion of PVC film by known processes.

By measuring the yellowness index of sample films having additive systems identified in Table 1, the thermal stability is determined. Strips of the sample films were placed in a 370°F (188°C) air circulating oven with strips periodically removed for testing. The yellowness index is measured by known techniques using a Colorimeter available from the Hunter Company. The results of the yellowness index with regard to static thermal stability are plotted in Figure 1. Of the sample films evaluated, the film having the preferred additive system ("Example") displayed the best color stability over time. Further, a film sample containing the preferred additive system and produced with 30% regrind material exhibits identical static thermal stability.

Melting and shearing the PVC material in a Brabender Fusion Head in air initially causes dehydrochlorination, leading to a gradual degradation of color. This dehydrochlorination is followed by cross-linking, evidenced by increased viscosity, stiffening and dramatic darkening of color of the PVC material. The Brabender test differs from the thermal heat aging test in that shear is applied to the material while it is being heated to specified temperature. Therefore, the results of the Brabender test depend not only on thermal stability but also on melt lubrication by the formulation ingredients. This is a close approximation to the conditions that the PVC material is subjected to during the melt fabrication processes, such as extrusion and injection molding. Also, recycling of ground trim or regrind means the PVC material has experienced additional heat and melt shear stress. Hence, this test can be used to simulate the addition of regrind back into an extruder or molder with virgin material, a multiple of times.

The yellowness index was measured on PVC film samples having the additive systems identified in Table 1. Referring to Figure 2, original film samples were generated by known extrusion methods (number of passes = 0). The original samples were then processed in the Brabender equipment at 370°F (188°C), 60 rpm in air, for 20 minutes (number of passes = 1). Recycling of regrind was completed 4 times with samples having 70 percent original film and 30 percent regrind from the immediately prior sample (number of passes = 2, 3, 4, 5). For example, samples for pass 2 were 70 percent original film and 30 percent regrind film from pass 1 samples. The results of the yellowness index are plotted in Figure 2. The film sample having the preferred additive system (Example) displayed the best color stability under processing conditions similar to conditions typical of known extrusion processes (heat, shear and contamination with regrind).

Further, we have learned that an optimal concentration of primary stabilizer, preferably zinc stearate and secondary stabilizer, epoxide, preferably propylene glycol bis(epoxy oleate), has resulted in surprising and unexpected improvements to the thermal stability and processability of the PVC material. Zinc stearate ("$ZnSt_2$") reacts to replace labile chlorocarbons on PVC in accordance with Formula 1 and to neutralize hydrochloric acid as in Formula 2.

$$PVC + ZnSt_2 \rightarrow PVC\text{-}St + ZnClSt + ZnCl_2 \qquad (1)$$

$$PVC \longrightarrow (HCl) \xrightarrow{ZnSt_2} ZnClSt + HSt \qquad (2)$$

Referring to Figure 3, excessive concentration of zinc stearate (e.g., Control 4) will result in an increase of zinc chloride which will catalyze further degradation and dehydrochlorination of PVC. We have discovered that excessive zinc chloride will also act as an initiator for the cross-linking of epoxide, causing a greater amount of plate out during the extrusion and black particles during extrusion or injection molding. In this way, excessive zinc chloride will also cause depletion of oxiranes, resulting in further loss of stability. Conversely, if the concentration of zinc stearate (e.g., Control 3) is too low, PVC will dehydrochlorinate with by-product HCl, which accelerates this degradation process and initiates the cross-linking consumption of the oxiranes.

Stabilization by an optimal amount of epoxide occurs through the neutralization of HCl (Formula 3) and the consequently lower zinc chloride formation (Formula 4).

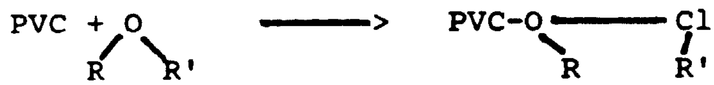
(3)

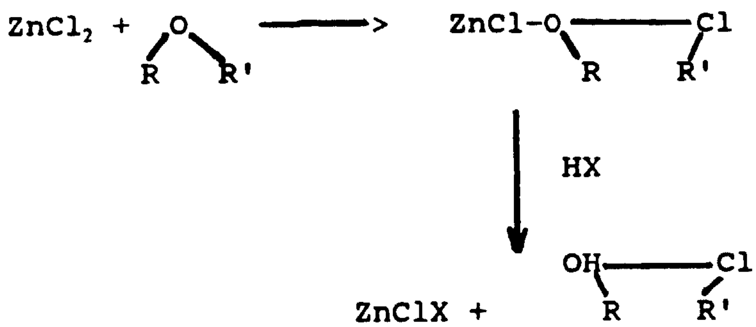

(4)

where X is -OH or stearate.

However, an excessive concentration of epoxide does not provide significantly better stabilization of color, but rather, results in more cross-linked epoxide, initiated by acids generated during heating. Otherwise, low concentration of epoxide will be rapidly consumed and, therefore, insufficient in providing stabilizing protection.

By utilizing the preferred additive system, further processing efficiencies and savings are realized. As indicated in Table 1, we have surprisingly found that plate-out or build-up of material on the processing equipment is not experienced when the additive system of the present invention is used. Therefore, higher amounts of lubricant may be used for improved melt fabrication without suffering plate-out. This absence of plate-out on extrusion dies and build-up on chill rolls eliminates down time of extrusion equipment. Further, generation of dark particulate matter from build-up within the melt processing equipment during processing is not experienced. An approximate 20-30% reduction in scrap rates is achieved when using the additive system of the present invention as compared to currently available PVC materials.

Improved product characteristics have also been realized when products are manufactured from PVC material having the inventive additive system. For example, medical containers, ports and tubing made from such PVC material have lower extractables and improved transparency after steam sterilization. Following Japanese Pharmacopeia XII Monograph ("JPXII") for extractive substances in medical containers, extruded film materials of PVC formulations containing various additive systems, as reported in Table 1, are examined. Film samples are cut into strips and autoclaved at 121°C for 1 hour in 200 ml of distilled, deionized water. The aqueous extract is analyzed for the presence of zinc, ammonia, and oxidizables; a change in pH; and, UV absorbing substances (at 241 and 220 nm wavelengths).

The results shown in Table 2 of the JPXII extractive substances data of film material samples with and without regrind confirm that the film material having the PVC additive system of the present invention is within the tolerance guidelines of the JPXII standards. Further, Figure 5 provides a comparison of oxidizables and Figure 6 provides a comparison of the UV absorbing substances in the aqueous extracts of film material having the PVC additive system of the present invention compared to the other PVC films.

It should be understood that various changes and modifications to the presently preferred embodiment described herein will be apparent to those skilled in the art. For example, it is foreseeable this inventive additive system is useful for chlorinated polyolefins such as chlorinated polyethylene and polypropylene as well as for PVC. Such changes and modifications can be made without departing from the spirit and scope of the present invention and without diminishing its attendant advantages. It is therefore intended that such changes and modifications be covered by the appended claims.

## Claims

1. An additive system for a polyvinyl chloride formulation for improved processability while maintaining thermal stability of the formulation, the additive system consisting essentially of:

   a primary stabilizer which is a Lewis acid metal compound selected from organo-tin compounds and organo-zinc compounds, in an amount of from 0.02 to 0.5 parts per hundred parts of the polyvinyl chloride;
   a secondary stabilizer selected from epoxide compounds having less than 5.2 oxirane groups per molecule, in an amount of from 10 to 100 parts per hundred parts of the polyvinyl chloride; and

an effective amount of an external lubricant for lubrication of the polyvinyl chloride formulation,

wherein the ratio of the primary stabilizer to the secondary stabilizer maximizes thermolytic color stability while limiting generation of excessive build-up, plate-out, and dark particles during the processing of the polyvinyl chloride formulation.

2. The additive system of Claim 1, wherein the primary stabilizer is an organo-tin compound selected from dialkyl tin esters, di(n-octyl) tin maleate polymer and di(n-octyl) tin-S,S'-bis(isooctyl)mercaptoacetate.

3. The additive system of Claim 1, wherein the primary stabilizer is an organo-zinc compound selected from alkyl carboxylates including zinc salts of fatty acids and polymeric ionomers based on combinations of monomers ethylene, alkyl acrylates, or styrene with acrylic acid, fumaric or maleic acids.

4. The additive system of any preceding claim, wherein the secondary stabilizer is propylene glycol bis(epoxy oleate).

5. The additive system of any preceding claim, wherein the external lubricant is selected from polyethylenes, oxidized polyethylenes, polyethylene ionomers, polyfluorocarbons, paraffin waxes, ester waxes, amide waxes, poly(ethylene ether), copolymers of ethylene oxide and propylene oxide, polyamides, polypeptides, poly(vinyl alcohol), poly (ethyleneco-vinyl alcohol), poly(hydroxyalkyl acrylates and methacrylates), copolymers of acrylic acid or its salts, copolymers of maleic anhydride with ethylene, propylene or styrene, and polymers containing sulfonic acid groups and their salts, and, sulfonated poly(aryl sulfones).

6. The additive system of Claim 5, wherein the external lubricant is high-density linear polyethylene.

7. The additive system of Claim 3, wherein the primary stabilizer is zinc stearate.

8. The additive system of any preceding claim, wherein the secondary stabilizer has approximately 2.5 oxiranes per molecule.

9. The additive system of any preceding claim, wherein the amount of the primary stabilizer is 0.05 to 0.3 parts per hundred parts of the polyvinyl chloride.

10. The additive system of claim 9, wherein the primary stabilizer is present in an amount of from 0.02 to less than 0.2 parts per hundred parts of the polyvinyl chloride.

11. The additive system of any preceding claim, wherein the amount of the secondary stabilizer is 10 to 20 parts per hundred parts of the polyvinyl chloride

12. The additive system of any one of Claims 1 to 10, wherein the amount of the secondary stabilizer is 40 to 80 parts per hundred parts of the polyvinyl chloride.

13. The additive system of any preceding claim, wherein the ratio of the primary stabilizer to the secondary stabilizer is in the range of from 0.002 to 0.005.

14. A medical product produced from a polyvinyl chloride formulation having an additive system, wherein the additive system consists essentially of:

approximately 0.06 weight percent of a primary stabilizer which is a Lewis acid metal compound selected from the organo-zinc compounds,
approximately 9.1 weight percent of a secondary stabilizer selected from epoxide compounds having less than 5.2 oxirane groups per molecule, and
approximately 0.015 weight percent of an external lubricant.

15. The medical product of Claim 14, wherein the product is produced by extrusion processing of the polyvinyl chloride formulation having the additive system.

16. The medical product of Claim 14, wherein the product is produced by injection mold processing of the polyvinyl chloride formulation having the additive system.

17. The medical product of Claim 14, 15 or 16, wherein the product contains aqueous solution, biological fluid or tissue.

18. The medical product of Claim 14, 15 or 16, wherein the product is tubing.

**Patentansprüche**

1. Additivsystem für ein Polyvinylchlorid-Gemisch zur verbesserten Verarbeitbarkeit unter Beibehaltung der thermischen Stabilität des Gemisches, wobei das Additivsystem im wesentlichen aus folgendem besteht:

    einem ersten Stabilisator, der eine Lewis-Säure-Metallverbindung ist, ausgewählt aus Organozinnverbindungen und Organozinkverbindungen in einer Menge von 0,02 bis 0,5 Teilen pro 100 Teilen Polyvinylchlorid;
    einem zweiten Stabilisator, ausgewählt aus Epoxidverbindungen mit weniger als 5,2 Oxirangruppen pro Molekül in einer Menge von 10 bis 100 Teilen pro 100 Teilen Polyvinylchlorid;
    einer wirksamen Menge eines äußeren Gleitmittels zur Schmierung des Polyvinylchlorid-Gemisches,

    wobei das Verhältnis des ersten Stabilisators zum zweiten Stabilisator die thermolytische Farbstabilität maximiert und die Bildung einer übermäßigen Anreicherung, Belagbildung und Ausbildung dunkler Teilchen während der Verarbeitung des Polyvinylchlorid-Gemisches begrenzt.

2. Additivsystem nach Anspruch 1,
wobei der erste Stabilisator eine Organozinnverbindung ist, ausgewählt aus Dialkylzinnestern, Di(n-octyl) zinnmaleat-Polymer und Di(n-octyl)zinn-S,S'-bis(isooctyl) mercaptoacetat.

3. Additivsystem nach Anspruch 1,
wobei der erste Stabilisator eine Organozinkverbindung ist, ausgewählt aus Alkylcarbonaten, umfassend Zinksalze von Fettsäuren und polymere Ionomere auf der Basis von Kombinationen der Monomeren Ethylen, Alkylacrylate, oder Styrol mit Acrylsäure, Fumarsäure oder Maleinsäure.

4. Additivsystem nach einem der vorhergehenden Ansprüche,
wobei der zweite Stabilisator Propylenglykol-bis(epoxyoleat) ist.

5. Additivsystem nach einem der vorhergehenden Ansprüche,
wobei das äußere Gleitmittel ausgewählt ist aus Polyethylenen, oxidierten Polyethylenen, Polyethylen-Ionomeren, Polyfluorkohlenstoffen, Paraffinwachsen, Esterwachsen, Amidwachsen, Poly(ethylenether), Copolymeren von Ethylenoxid und Propylenoxid, Polyamiden, Polypeptiden, Poly(vinylalkohol), Poly(ethylen-co-vinylalkohol), Poly (hydroxyalkylacrylaten und -methacrylaten), Copolymeren von Acrylsäure oder ihren Salzen, Copolymeren von Maleinsäure mit Ethylen, Propylen oder Styrol, und Polymeren, die Sulfonsäuregruppen enthalten, und ihren Salzen, und sulfonierten Poly(arylsulfonen).

6. Additivsystem nach Anspruch 5,
wobei das äußere Gleitmittel ein lineares Polyethylen hoher Dichte ist.

7. Additivsystem nach Anspruch 3,
wobei der erste Stabilisator Zinkstearat ist.

8. Additivsystem nach einem der vorhergehenden Ansprüche,
wobei der zweite Stabilisator etwa 2,5 Oxirane pro Molekül enthält.

9. Additivsystem nach einem der vorhergehenden Ansprüche,
wobei die Menge des ersten Stabilisators 0,05 bis 0,3 Teile pro 100 Teile des Polyvinylchlorids beträgt.

10. Additivsystem nach Anspruch 9,
wobei der erste Stabilisator in einer Menge von 0,02 bis weniger als 0,2 Teile pro 100 Teile Polyvinylchlorid vorhanden ist.

11. Additivsystem nach einem der vorhergehenden Ansprüche,
wobei die Menge des zweiten Stabilisators 10 bis 20 Teile pro 100 Teile Polyvinylchlorid beträgt.

**12.** Additivsystem nach einem der Ansprüche 1 bis 10, wobei die Menge des zweiten Stabilisators 40 bis 80 Teile pro 100 Teile Polyvinylchlorid beträgt.

**13.** Additivsystem nach einem der vorhergehenden Ansprüche, wobei das Verhältnis von dem ersten Stabilisator zu dem zweiten Stabilisator im Bereich von 0,002 bis 0,005 liegt.

**14.** Medizinisches Erzeugnis, hergestellt aus einem Polyvinylchlorid-Gemisch, das ein Additivsystem enthält, wobei das Additivsystem im wesentlichen aus folgendem besteht:

etwa 0,06 Gew.-% eines ersten Stabilisators, der eine Lewis-Säure-Metallverbindung ist, ausgewählt aus den Organozinkverbindungen,
etwa 9,1 Gew.-% eines zweiten Stabilisators, ausgewählt aus Epoxidverbindungen mit weniger als 5,2 Oxirangruppen pro Molekül, und
etwa 0,015 Gew.-% eines äußeren Gleitmittels.

**15.** Medizinisches Erzeugnis nach Anspruch 14, wobei das Erzeugnis durch Extrudieren des das Additivsystem enthaltenden Polyvinylchlorid-Gemisches hergestellt ist.

**16.** Medizinisches Erzeugnis nach Anspruch 14, wobei das Erzeugnis durch Spritzgießen des das Additivsystem enthaltenden Polyvinchlorid-Gemisches hergestellt ist.

**17.** Medizinisches Erzeugnis nach Anspruch 14, 15 oder 16, wobei das Erzeugnis eine wässerige Lösung, ein biologisches Fluid oder Gewebe enthält.

**18.** Medizinisches Erzeugnis nach Anspruch 14, 15 oder 16, wobei das Erzeugnis ein Schlauch ist.

**Revendications**

**1.** Système additif pour une formulation de poly(chlorure de vinyle) pour améliorer l'aptitude à la mise en oeuvre tout en maintenant la stabilité thermique de la formulation, le système additif étant constitué principalement de :

un stabilisant primaire qui est un composé métallique acide de Lewis choisi parmi les composés organiques de l'étain et les composés organiques du zinc, en une quantité de 0,02 à 0,5 partie pour 100 parties du poly (chlorure de vinyle) ;
un stabilisant secondaire choisi parmi les composés époxydés ayant moins de 5,2 groupes oxirane par molécule, en une quantité de 10 à 100 parties pour 100 parties du poly(chlorure de vinyle) ; et
une quantité efficace d'un lubrifiant externe pour la lubrification de la formulation de poly(chlorure de vinyle), dans lequel le rapport du stabilisant primaire au stabilisant secondaire maximise la stabilité thermolytique de la couleur tout en limitant la génération excessive d'accumulation, de dépôt et de particules sombres durant le traitement de la formulation de poly(chlorure de vinyle).

**2.** Système additif selon la revendication 1, dans lequel le stabilisant primaire est un composé organique de l'étain choisi parmi les esters dialkyliques de l'étain, les polymères de maléate de di(n-octyl)étain et le S,S'-bis(isooctyl) mercaptoacétate de di(n-octyl)étain.

**3.** Système additif selon la revendication 1, dans lequel le stabilisant primaire est un composé organique du zinc choisi parmi les alkylcarboxylates, y compris les sels de zinc d'acides gras et d'ionomères polymères à base de combinaisons de monomères d'éthylène, d'acrylates d'alkyle, ou de styrène avec de l'acide acrylique ou des acides fumarique ou maléique.

**4.** Système additif selon l'une quelconque des revendications précédentes, dans lequel le stabilisant secondaire est le bis(époxyoléate) de propylèneglycol.

**5.** Système additif selon l'une quelconque des revendications précédentes, dans lequel le lubrifiant externe est choisi

parmi les polyéthylènes, les polyéthylènes oxydés, les ionomères de polyéthylène, les polyfluorocarbones, les cires de paraffine, les cires d'ester, les cires d'amide, le poly(éthylène-éther), les copolymères d'oxyde d'éthylène et d'oxyde de propylène, les polyamides, les polypeptides, le poly(alcool vinylique), le copolymère éthylène/alcool vinylique, les poly(acrylates et méthacrylates d'hydroxyalkyle), les copolymères d'acide acrylique ou de ses sels, les copolymères d'anhydride maléique avec l'éthylène, le propylène ou le styrène, et les polymères contenant des groupes acide sulfonique et leurs sels, ainsi que les polyarylsulfones sulfonées.

**6.** Système additif selon la revendication 5, dans lequel le lubrifiant externe est un polyéthylène linéaire haute densité.

**7.** Système additif selon la revendication 3, dans lequel le stabilisant primaire est le stéarate de zinc.

**8.** Système additif selon l'une quelconque des revendications précédentes, dans lequel le stabilisant secondaire a environ 2,5 groupes oxirane par molécule.

**9.** Système additif selon l'une quelconque des revendications précédentes, dans lequel la quantité du stabilisant primaire est de 0,05 à 0,3 partie pour 100 parties du poly(chlorure de vinyle).

**10.** Système additif selon la revendication 9, dans lequel le stabilisant primaire est présent en une quantité de 0,02 à moins de 0,2 partie pour 100 parties du poly(chlorure de vinyle).

**11.** Système additif selon l'une quelconque des revendications précédentes, dans lequel la quantité du stabilisant secondaire est de 10 à 20 parties pour 100 parties du poly(chlorure de vinyle).

**12.** Système additif selon l'une quelconque des revendications 1 à 10, dans lequel la quantité du stabilisant secondaire est de 40 à 80 parties pour 100 parties du poly(chlorure de vinyle).

**13.** Système additif selon l'une quelconque des revendications précédentes, dans lequel le rapport du stabilisant primaire au stabilisant secondaire est situé dans la plage allant de 0,002 à 0,005.

**14.** Produit médical produit à partir d'une formulation de poly(chlorure de vinyle) ayant un système additif, dans lequel le système additif est constitué principalement de :

environ 0,06 % en poids d'un stabilisant primaire qui est un composé métallique acide de Lewis choisi parmi les composés organiques du zinc,
environ 9,1 % en poids d'un stabilisant secondaire choisi parmi les composés époxydés ayant moins de 5,2 groupes oxirane par molécule, et
environ 0,015 % en poids d'un lubrifiant externe.

**15.** Produit médical selon la revendication 14, dans lequel le produit est produit par traitement d'extrusion de la formulation de poly(chlorure de vinyle) ayant le système additif.

**16.** Produit médical selon la revendication 14, dans lequel le produit est produit par traitement de moulage par injection de la formulation de poly(chlorure de vinyle) ayant le système additif.

**17.** Produit médical selon la revendication 14, 15 ou 16, dans lequel le produit contient une solution aqueuse ou un fluide ou tissu biologique.

**18.** Produit médical selon la revendication 14, 15 ou 16, dans lequel le produit est une tubulure.

FIG. 1

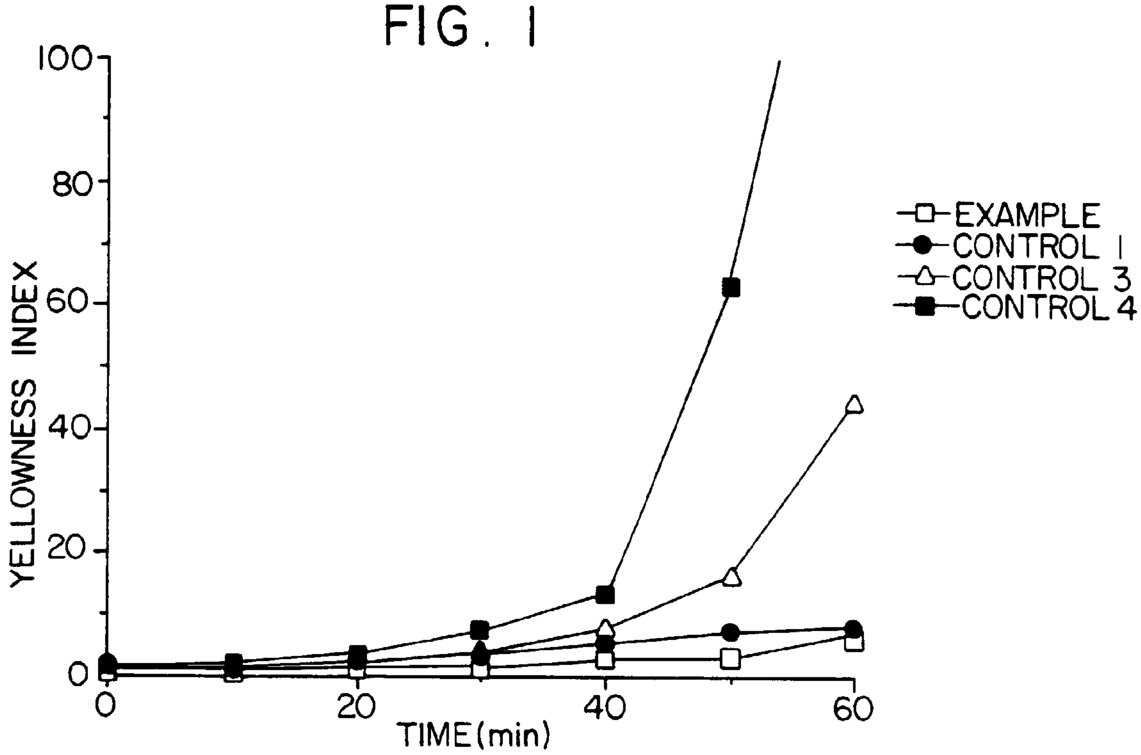
100
80
60
40
20
0
YELLOWNESS INDEX
0
20
40
60
TIME (min)
EXAMPLE
CONTROL 1
CONTROL 3
CONTROL 4

FIG. 2

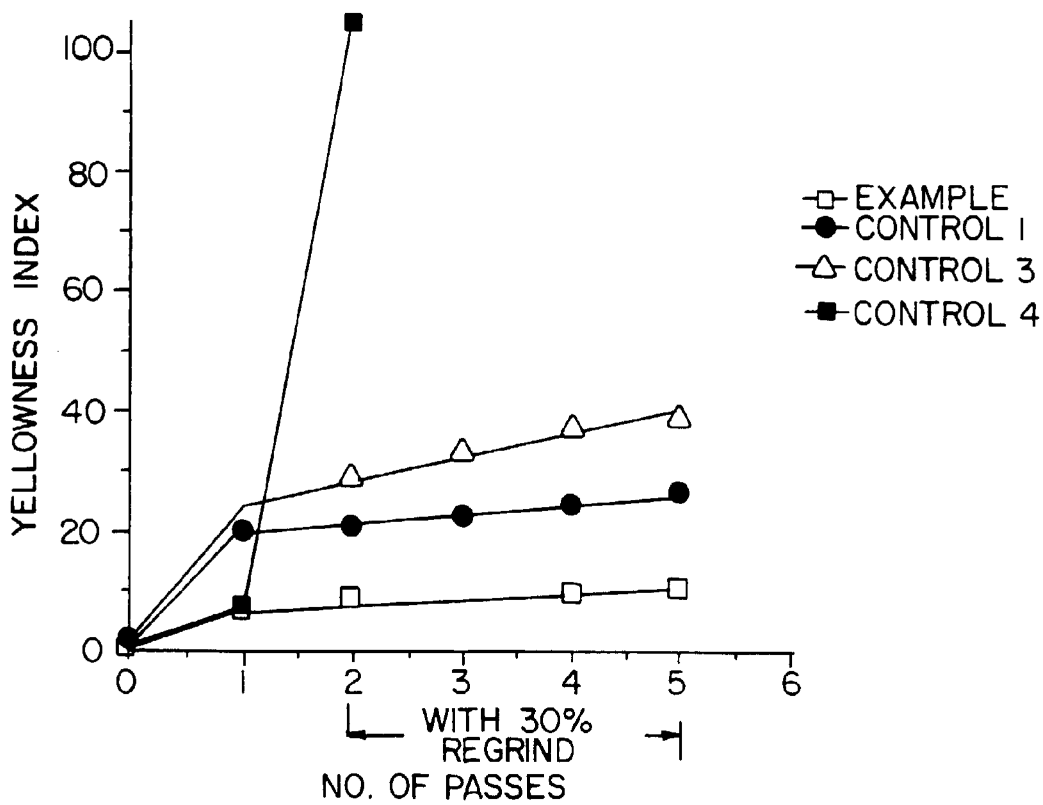
100
80
60
40
20
0
YELLOWNESS INDEX
0
1
2
3
4
5
6
WITH 30% REGRIND
NO. OF PASSES
EXAMPLE
CONTROL 1
CONTROL 3
CONTROL 4

FIG. 3

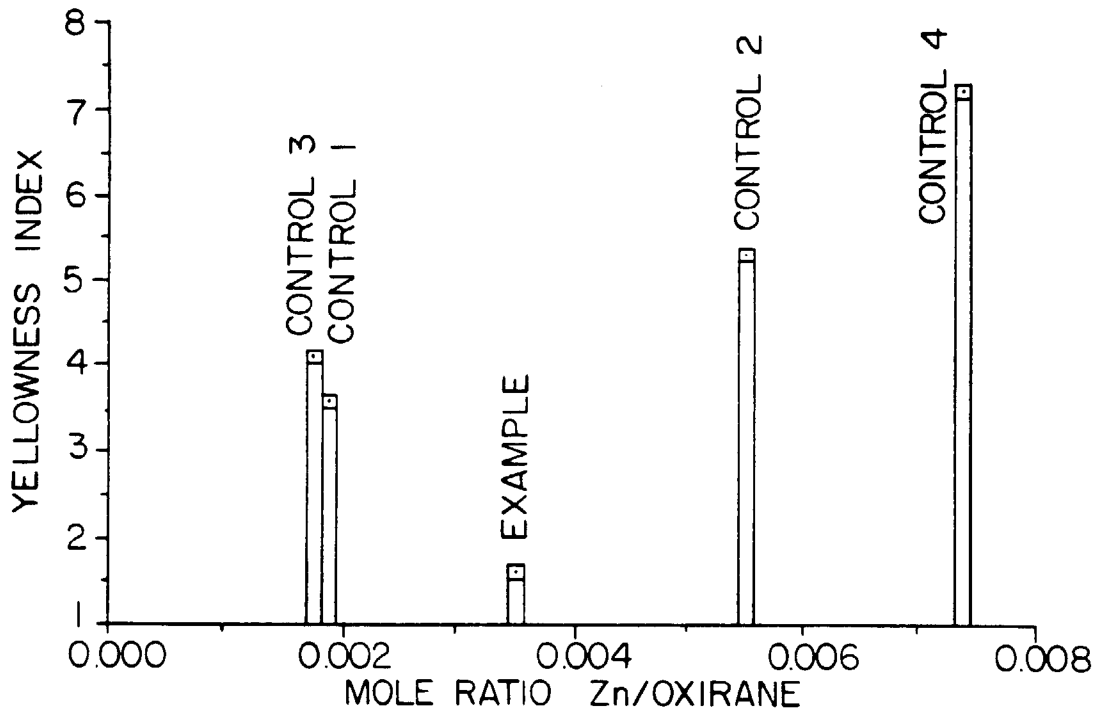
8
7
6
5
4
3
2
1
YELLOWNESS INDEX
CONTROL 3
CONTROL 1
EXAMPLE
CONTROL 2
CONTROL 4
0.000
0.002
0.004
0.006
0.008
MOLE RATIO Zn/OXIRANE

FIG. 4

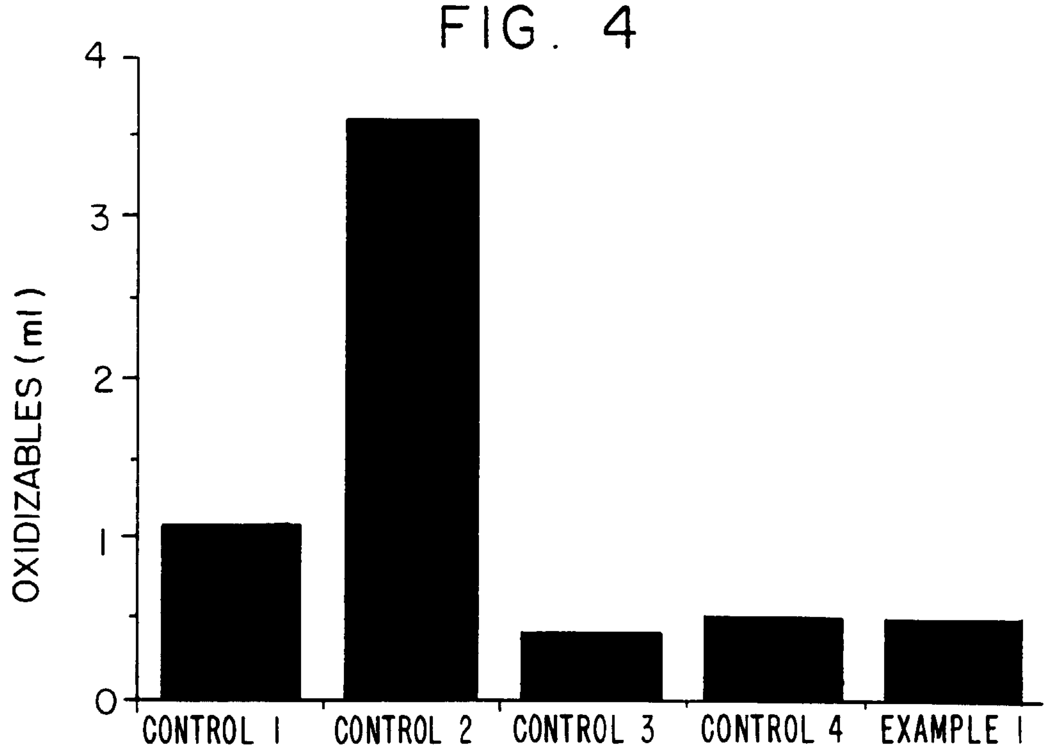
4
3
2
1
0
OXIDIZABLES (ml)
CONTROL 1
CONTROL 2
CONTROL 3
CONTROL 4
EXAMPLE 1

FIG. 5

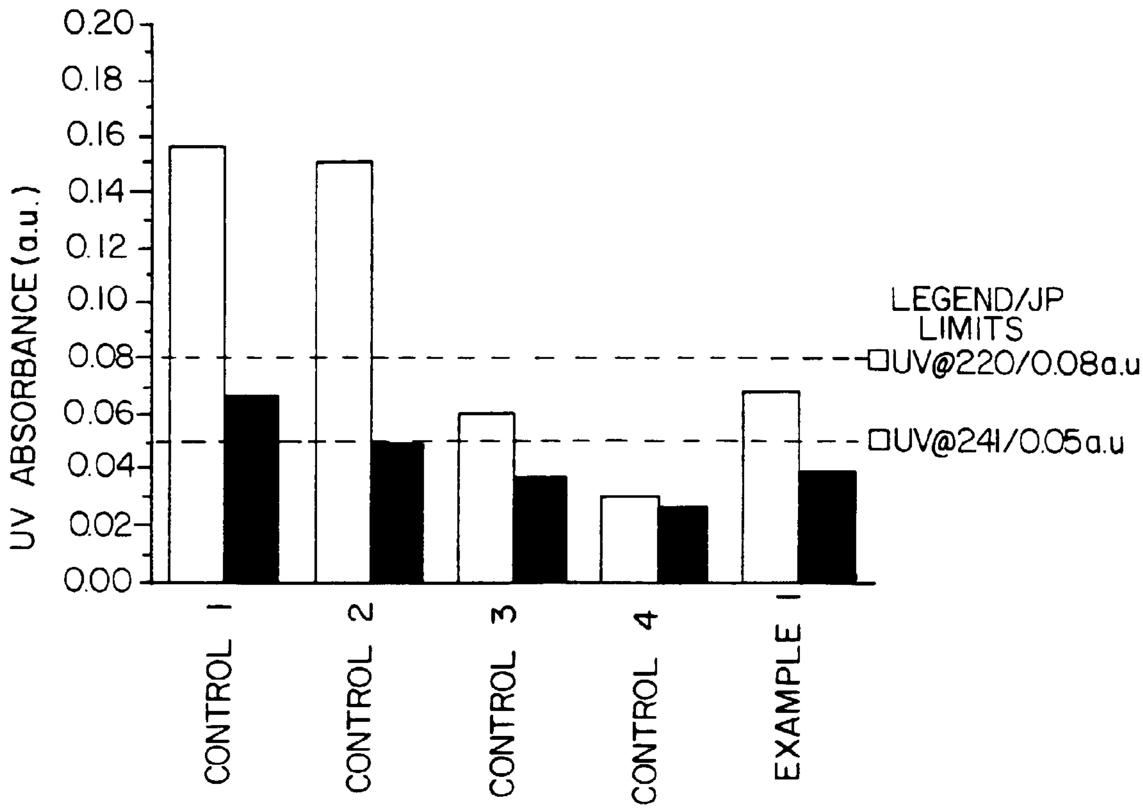
0.20
0.18
0.16
0.14
0.12
0.10
0.08
0.06
0.04
0.02
0.00
UV ABSORBANCE (a.u.)
LEGEND/JP LIMITS
UV@220/0.08a.u
UV@241/0.05a.u
CONTROL 1
CONTROL 2
CONTROL 3
CONTROL 4
EXAMPLE 1